# FASCICULE DE BREVET EUROPEEN

(11) **EP 3 318 035 B1**
(45) Date de publication et mention de la délivrance du brevet: **03.11.2021**
(21) Numéro de dépôt: 16742354.0
(22) Date de dépôt: 30.06.2016
(51) Int. Cl.: H04L 29/06, H04L 12/28

(54) **PROCÉDÉ DE CONTRÔLE D'UNE INSTALLATION DOMOTIQUE**
VERFAHREN ZUR STEUERUNG EINER HEIMAUTOMATIONSANLAGE
METHOD FOR CONTROLLING A HOME-AUTOMATION FACILITY

(30) Priorité: 03.07.2015 FR 1556296
(43) Date de publication de la demande: 09.05.2018
(73) Titulaire: Somfy SAS, 74300 Cluses (FR)
(72) Inventeur: COSSERAT, Hubert, 74100 Annemasse (FR); MICHEL, Florent, 07210 Chomerac (FR)
(74) Mandataire: Germain Maureau
(86) Numéro de dépôt international: PCT/FR2016/051632
(87) Numéro de publication internationale: WO 2017/006019

(56) Documents cités:
- US-A1- 2005 021 852
- US-A1- 2014 040 435
- US-A1- 2015 012 646

## Description

La présente invention concerne un procédé de contrôle d'une installation domotique.

Une installation domotique d'un bâtiment peut comprendre une pluralité de dispositifs domotiques. Il est connu de procéder à la configuration, à la commande et/ou à la supervision de ladite installation en utilisant une unité centrale de commande qui communique avec un ou plusieurs dispositifs domotiques.

Le document de l'art antérieur US2014/040435 A1 décrit un système de réseau de contrôle domestique dans lequel l'identification et l'appariement de dispositifs utilise des clés pour la connexion avec les serveurs domotique.

L'enregistrement de l'unité centrale de commande et la configuration de l'installation nécessitent d'interagir avec l'unité centrale de commande.

Les opérations d'enregistrement peuvent être compliquées par la saisie de numéro de série ou d'identifiant de façon manuelle, ou encore par le fait que ces opérations doivent être réalisées sans accès à un réseau étendu permettant l'accès à une unité de gestion distante.

La présente invention a pour but de résoudre tout ou partie des inconvénients mentionnés ci-dessus.

A cet effet, la présente invention concerne un procédé de contrôle d'une installation domotique comprenant au moins une unité centrale de commande; le procédé étant exécuté par un terminal utilisateur et comprenant les étapes suivantes :
i. Sélection d'un premier mode de connexion local ou d'un deuxième mode de connexion par un réseau étendu, ladite sélection étant reçue de l'utilisateur du terminal ou d'une application que l'utilisateur a préalablement lancée;
ii. Etablissement d'une connexion entre le terminal utilisateur et au moins une unité cible, ladite au moins une unité cible étant une unité centrale de commande dans le cas où le premier mode de connexion local a été sélectionné, et une unité de gestion dans le cas où le second mode de connexion par un réseau étendu est sélectionné ;
iii. Envoi d'un message de découverte en lien avec un identifiant d'installation à destination de l'au moins une unité cible ;
iv. Réception d'au moins un message de description de topologie en provenance de l'unité cible comprenant une description d'un groupe de dispositifs rattaché à l'identifiant de l'installation.

Grâce aux dispositions selon l'invention, le contrôle de l'installation domotique peut être réalisé indifféremment par une connexion locale ou une connexion par un réseau étendu.

On entend par message un élément d'information notifié ou réceptionné sous la forme d'un appel synchrone ou asynchrone, pouvant également correspondre à un appel de fonction local ou distant.

Par installation, on entend un ensemble comprenant une pluralité de dispositifs domotiques et une pluralité d'unités de commande disposés dans un seul bâtiment ou sur une pluralité de lieux, chaque dispositif domotique étant relié à une unité électronique de commande parmi la pluralité d'unités électroniques de commande, la pluralité d'unités électroniques de commande formant un groupe sous le contrôle d'un utilisateur. Les dispositifs électroniques forment des groupes d'au moins un dispositif domotique rattaché à une unité électronique de commande.

Un même dispositif ou une même unité de commande peut appartenir à deux installations différentes sous la responsabilité de deux utilisateurs différents. A titre d'exemple, un dispositif domotique correspondant à un système de chauffage peut être compris dans une première installation domotique comprenant un ensemble des dispositifs compris dans un logement, sous le contrôle d'un utilisateur occupant le logement, et dans une seconde installation domotique comprenant un ensemble de dispositifs domotiques correspondant à des systèmes de chauffage disposés dans une pluralité de logement sous le contrôle d'un utilisateur administrateur des équipements de chauffage pour la pluralité de logements.

On entend par dispositif domotique un équipement domotique et/ou un capteur, ou encore une partie d'équipement domotique ou une partie de capteur correspondant à un sous-ensemble fonctionnel.

Par unité centrale de commande de l'installation domotique, on entend une unité électronique comprenant au moins une unité de traitement pour contenir et exécuter au moins un programme d'ordinateur, comprenant au moins un module de communication destinée au contrôle et/ou à la commande d'au moins un dispositif domotique et au moins un module de communication avec l'unité de gestion. L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Selon un aspect de l'invention, l'unité de gestion est un serveur connecté à distance à l'au moins une installation domotique, par l'intermédiaire d'un réseau étendu.

Selon un aspect de l'invention, l'unité de gestion est un serveur connecté à distance à l'au moins une installation domotique, par l'intermédiaire d'un réseau étendu. Selon un autre aspect de l'invention, l'unité de gestion est une unité centrale destinée à être reliée à une ou plusieurs unités centrales de commande sur des réseaux privés ou locaux distincts, ou encore sur le même réseau local.

Selon un aspect de l'invention, le procédé comprend en outre l'étape suivante :
- Présentation d'une interface à un utilisateur sur le terminal utilisateur permettant la commande ou le contrôle des dispositifs domotiques appartenant au groupe de dispositifs rattaché à l'identifiant de l'installation,

Selon un aspect de l'invention, le premier mode de connexion local a été sélectionné, l'au moins une unité cible étant au moins une unité centrale de commande,
l'étape d'envoi d'un message de découverte en lien avec un identifiant d'installation correspond à l'envoi d'un message de découverte à au moins une unité de commande correspondant à un identifiant d'unité centrale de commande associé à un identifiant d'installation ;
et l'étape de réception d'au moins un message de description de topologie correspond à :
   - la réception d'au moins un message de description de topologie en provenance de l'au moins une unité centrale de commande comprenant une description d'un groupe de dispositifs rattaché à l'unité centrale de commande et à
   - l'enregistrement du groupe de dispositifs en lien avec l'identifiant de l'installation dans le groupe de dispositif rattaché à l'identifiant de l'installation.

Selon un aspect de l'invention, l'identifiant de l'installation de l'installation domotique étant associée à un groupe comprenant au moins les identifiants d'une première unité centrale de commande et d'une deuxième unité centrale de commande.

Grâce aux dispositions selon l'invention, il est possible d'utiliser plusieurs unités centrales de commandes au sein d'une même installation afin d'étendre le nombre de types de dispositifs domotiques ou le nombre de protocoles domotiques utilisables dans une même installation, ou d'augmenter le nombre de dispositifs total de l'installation, tout en conservant une identification de l'appartenance des différents dispositifs domotiques à une même installation.

Ainsi, l'interface présentée à l'utilisateur peut ainsi ajouter une couche d'abstraction pour cacher le rattachement effectif des dispositifs aux unités centrales de commande. L'interface représente ainsi les équipements domotiques, comme les volets, stores, systèmes HVAC ou d'éclairage, pilotables dans l'installation ainsi que les capteurs présents.

Ces dispositions sont obtenues sans communication entre les unités centrales de commande, mais simplement par le rattachement logique opéré lors de l'enregistrement.

Selon un aspect de l'invention, le procédé comprend au moins les étapes suivantes :
- Une première étape d'envoi d'un premier message de découverte à la première unité de commande correspondant à un premier identifiant d'unité centrale de commande associé à l'identifiant d'installation ;
- Une deuxième étape d'envoi d'un deuxième message de découverte à la deuxième unité de commande correspondant à un deuxième identifiant d'unité centrale de commande associé à l'identifiant d'installation ;
- Une première étape de réception d'un premier message de description de topologie comprenant une description d'un premier groupe de dispositifs rattaché à la première unité centrale de commande ; et

- Une deuxième étape de réception d'un deuxième message de description de topologie comprenant une description d'un deuxième groupe de dispositifs rattaché à la deuxième unité centrale de commande.
- Une première étape d'enregistrement du premier groupe de dispositifs en lien avec l'identifiant de l'installation dans le groupe de dispositif rattaché à l'installation ; et
- Une deuxième étape d'enregistrement du deuxième groupe de dispositifs en lien avec l'identifiant de l'installation dans le groupe de dispositif rattaché à l'installation ;

l'identifiant de l'installation domotique étant associée à un groupe de dispositifs regroupant les dispositifs contenus dans au moins le premier groupe de dispositifs attaché à la première unité centrale de commande et au moins le deuxième groupe de dispositifs attaché à la deuxième unité centrale de commande.

Ainsi, les dispositifs sont considérés comme rattachés à au même identifiant d'une installation, dans un groupe qui rassemble l'ensemble des dispositifs de l'installation rattachés indifféremment à la première ou à la seconde unité centrale de commande qui peut être communiqué à un utilisateur ou à une application tierce.

Selon un aspect de l'invention, le deuxième mode de connexion par un réseau étendu a été sélectionné, l'au moins une unité cible étant au moins une unité de gestion,

l'étape d'envoi d'un message de découverte en lien avec un identifiant d'installation correspond à l'envoi d'un message de découverte à une unité de gestion ;
et l'étape de réception d'au moins un message de description de topologie correspond à la réception d'au moins un message de description de topologie en provenance de l'unité de gestion comprenant une description d'un groupe de dispositifs rattaché à l'identifiant de l'installation.

Selon un aspect de l'invention, l'identifiant de l'installation de l'installation domotique est associée à un groupe comprenant au moins les identifiants d'une première unité centrale de commande et d'une deuxième unité centrale de commande,
et l'identifiant de l'installation domotique est associée à un groupe de dispositifs regroupant les dispositifs contenus dans au moins un premier groupe de dispositifs attaché à la première unité centrale de commande et au moins un deuxième groupe de dispositifs attaché à la deuxième unité centrale de commande.

Selon un aspect de l'invention, le procédé comprend en outre l'étape suivante :
- enregistrement d'une information de rattachement d'au moins un dispositif domotiques à une unité centrale de commande ;

Le stockage de cette information est prévu en vue du routage des messages vers l'unité centrale de commande concernée dans le cas de commande par le terminal.

Selon un aspect de l'invention, les dispositifs domotiques sont identifiés de façon unique par un identifiant de dispositif comprenant un identifiant de l'unité centrale de commande à laquelle se rattache ledit dispositif.

Selon un aspect de l'invention, le procédé comprend en outre l'étape suivante :
- Fermeture de la connexion entre le terminal utilisateur et l'au moins une unité cible ;
- Invalidation de l'enregistrement du groupe de dispositif rattaché à l'installation.

La présente invention concerne également un produit programme d'ordinateur comprenant des instructions de code agencées pour mettre en œuvre les étapes d'un procédé tel que décrit précédemment, lorsque ledit programme est exécuté par un processeur d'un terminal utilisateur.

La présente invention concerne également un procédé de contrôle d'une installation domotique comprenant au moins une unité centrale de commande; le procédé étant exécuté par une unité de gestion et comprenant les étapes suivantes :
i. Réception d'un message de découverte en lien avec un identifiant d'installation en provenance d'au moins un terminal utilisateur ;
ii. Envoi d'un message de découverte à au moins une unité de commande correspondant à un identifiant d'unité centrale de commande associé à l'identifiant d'installation ;
iii. Réception d'au moins un message de description de topologie en provenance de l'au moins une unité centrale de commande comprenant une description d'un groupe de dispositifs rattaché à l'unité centrale de commande ;
iv. Enregistrement du groupe de dispositifs rattaché à l'unité centrale de commande dans un groupe de dispositif rattaché à l'identifiant de l'installation ;
v. Envoi d'au moins un message de description de topologie à destination du terminal utilisateur comprenant la description du groupe de dispositifs rattaché à l'identifiant de l'installation.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant les relations entre une entité représentative d'une installation domotique, les unités centrales de commande et les dispositifs de l'installation domotique.
Les figure 4 et 5 sont des schémas illustrant deux modes de mise en œuvre d'un procédé de contrôle d'une unité centrale de commande d'une installation domotique selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

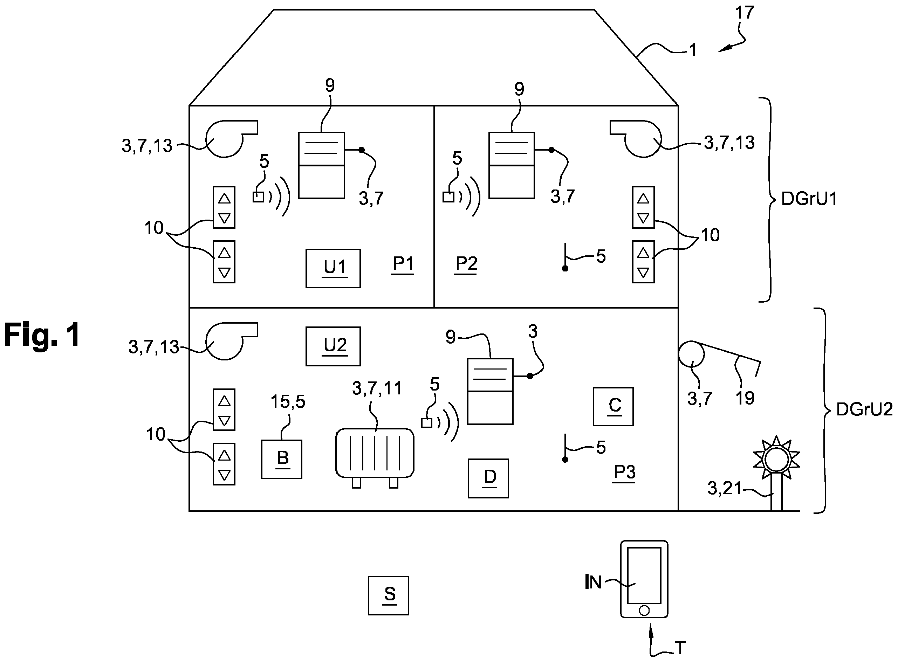

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dis positif D indifféremment pour désigner des capteurs ou des équipements domotiques, ou encore des parties d'équipements domotiques 3 ou de capteurs 5.

L'installation domotique 17 comprend une ou plusieurs unités centrales de commande U1, U2. En particulier et à titre d'exemple, deux unités centrales de commande U1, U2 sont représentées sur la figure 1.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des nœuds ou points d'extrémité dans le réseau local.

Le système d'adressage local peut être hiérarchique ou à plat, le format d'adresse pouvant être numérique ou alphanumérique.

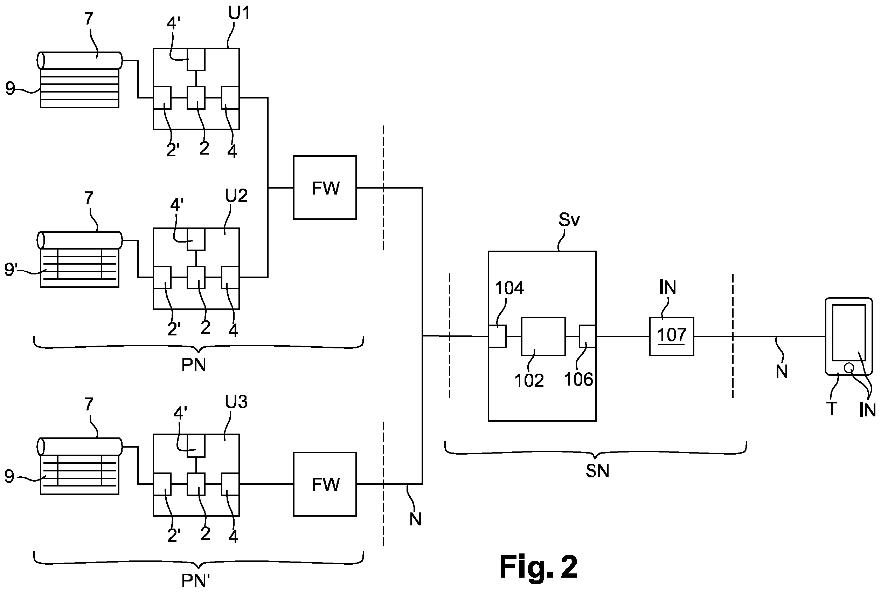

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un second réseau privé PN', indépendant du réseau privé PN correspondant à une seconde installation domotique. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en œuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Chaque unité centrale de commande U comprend, en outre, un module de communication 4' pour communiquer selon un protocole de communication local, par exemple Bluetooth ou Wifi, avec un terminal de communication mobile ou terminal utilisateur T. Le terminal de communication mobile T peut contenir et exécuter un logiciel d'application APP.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Selon une autre possibilité, une installation 17 au sens de l'invention peut comprendre des dispositifs domotiques disposés sur une pluralité de lieux, avec au moins une unité centrale de commande sur chacun de ces lieux à laquelle sont rattachés les dispositifs domotiques, les unités centrales de commande U de l'installation étant placées sous le contrôle d'un utilisateur.

A titre d'exemple, une telle installation peut comprendre un ensemble de dispositifs domotiques constitués par des systèmes de chauffage répartis dans un ensemble de logements ou de locaux tertiaires, rattaché à un ensemble d'unité centrales de commande U, l'ensemble de dispositifs domotiques étant destiné à être commandé par un utilisateur spécifiques en charge du chauffage pour ledit ensemble de logements ou de locaux tertiaires.

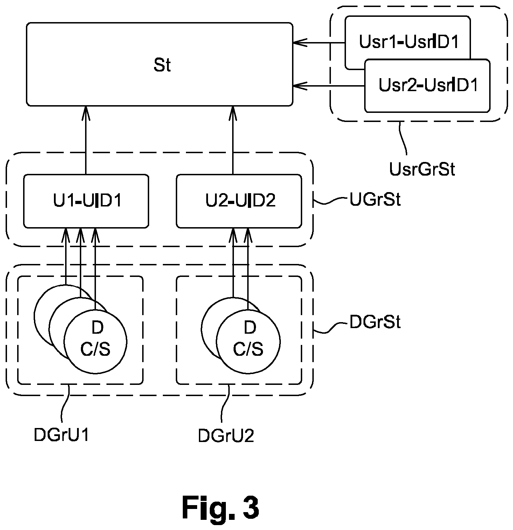

Nous allons à présent décrire, en référence à la figure 3, la représentation de l'installation 17 par une entité représentative St sur le serveur Sv, dans le cas où l'installation comprend de multiples unités centrales de commandes U.

Le système selon l'invention rattache plusieurs unités centrales de commande U à un seul objet St représentant une installation 17 par une configuration au niveau du serveur Sv.

Le serveur Sv peut ainsi présenter à l'utilisateur l'installation 17 comme un seul ensemble de dispositifs D à l'utilisateur, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

L'identification de l'entité représentative St de l'installation peut être selon un mode de réalisation réalisée par l'un quelconque des identifiants UID de l'une des unités centrales de commande U présente dans l'installation, par un identifiant de l'installation ou de l'utilisateur.

Ainsi, pour simplifier la désignation d'une installation dans les APIs publiques, il suffit que les utilisateurs de ces APIs fournissent un identifiant unique attachée à l'entité représentative St de l'installation 17.

De façon interne au serveur, un identifiant unique de l'entité représentative St de l'installation 17 peut exister pour faciliter l'implémentation.

Ainsi, l'entité représentative St peut être associée à une liste ou groupe de dispositifs DGrSt regroupant les dispositifs contenus dans les différents groupes DGrU1, DGrU2 attachés à chaque unité centrale de commande U1, U2, et à un groupe UGrSt des identifiants UID des unités centrales de commandes concernées U. Les dispositifs sont identifiés par un identifiant unique Une entité représentative d'une installation domotique peut être associée avec un utilisateur donné Usr1, identifié par un identifiant UsrID, correspondant par exemple à une combinaison login et mot de passe ou avec un groupe d'utilisateur donné UsrGrSt.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1. knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2. io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

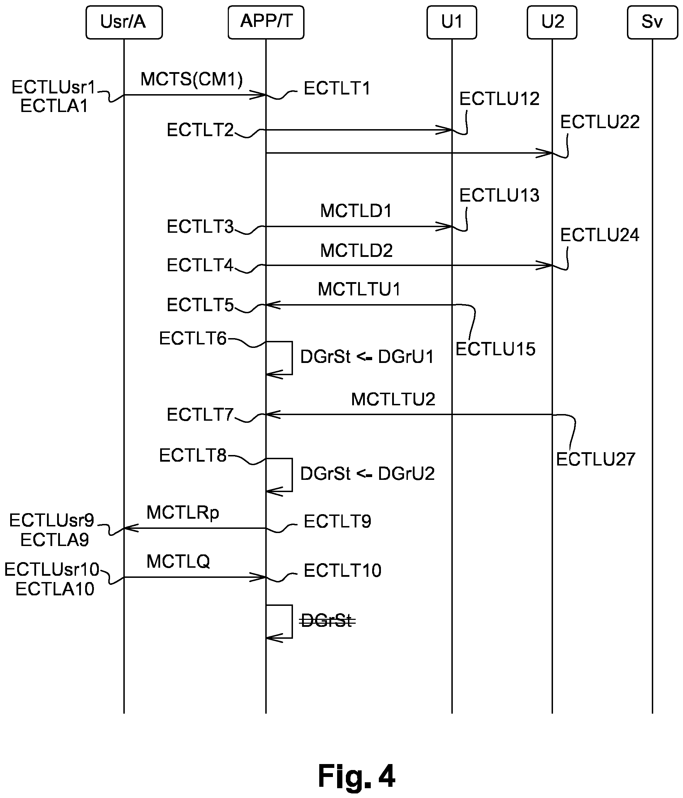

Un procédé de contrôle d'une installation domotique 17 d'un bâtiment 1 va à présent être décrit en référence à la figure 4, dans un cas d'utilisation d'une communication locale. Nous supposerons ici que le procédé est effectué par un terminal utilisateur mobile T, par exemple exécutant une application APP.

Dans une première étape ECTLT1, un message MCtlS ou une instruction de sélection de mode de communication est reçu en provenance par exemple d'un utilisateur ou d'une application tierce qui émet ou communique ce message ou cette instruction respectivement dans une étape ECTLUsr1 ou ECTLA1. L'utilisateur peut avoir préalablement lancé l'application APP et créé ou ouvert son compte utilisateur. Il a renseigné ses identifiants UsrID, par exemple un login et mot de passe.

Nous supposerons dans le cas illustré sur la figure 4 que le mode de communication sélectionné est un premier mode de connexion local CM1 ;

Selon une variante, la sélection du mode de connexion peut être réalisée de façon automatique. Le terminal T détecte la proximité des unités centrales de commande U en utilisant les procédures de découverte (discovery) spécifiques aux protocoles de communication locale comme par exemple Bluetooth ou Wifi, et essaie d'établir une connexion avec lesdites unités centrales de commande U selon le mode local. Si cette connexion est établie avec succès, alors le mode de connexion sélectionné est le mode de connexion local.

Selon une autre variante, la sélection du mode de connexion peut être réalisée de façon manuelle, par l'intermédiaire d'une interface homme machine du terminal T. L'application APP peut proposer à l'utilisateur le choix entre le mode de connexion local ou le mode de connexion par le réseau étendu.

Une connexion est alors établie dans une étape ECTLT2 de façon locale individuellement entre le terminal T et les unités centrales de commande U de l'installation 17, en utilisant un protocole local, notamment un protocole sans fil, comme par exemple un protocole de type Bluetooth, Zigbee, ou encore en Wifi, soit directement, soit par l'intermédiaire d'un point d'accès qui peut intégrer dans ce cas une fonction de passerelle de protocoles (par exemple : Ethernet à WiFi/Bluetooth/ Zigbee). Les unités centrales de commande U1 et U2 acceptent cette connexion respectivement dans des étapes ECTLU21 et ECTLU22. Nous désignerons par la suite par terminal indifféremment le terminal ou l'application APP exécutée sur ce terminal T.

Nous supposerons que l'identifiant de l'installation StID de l'installation domotique 17 est associée à un groupe UGrSt comprenant au moins les identifiants UID1, UID2 d'une première unité centrale de commande U1 et d'une deuxième unité centrale de commande U2. Cette association a été enregistrée dans l'application du terminal lors d'une phase d'enregistrement préalable.

L'envoi d'un premier message de découverte MCTLD1 est réalisé dans une étape ECtl3 à destination de la première unité de commande U1 correspondant au premier identifiant d'unité centrale de commande UID1 associé à l'identifiant StID d'installation.

L'envoi d'un deuxième message de découverte MCTLD2 est réalisé dans une étape ECTL4 à destination de la deuxième unité de commande U2 correspondant au deuxième identifiant d'unité centrale de commande UID2 associé à l'identifiant StID d'installation.

Par la suite, la première unité centrale de commande U1 envoie, en réponse au message de découverte MCTLD, dans une étape ECTLU15, un message de description de topologie MCTLTU1 comprenant une description d'un groupe de dispositifs DGrU1 rattaché à l'unité centrale de commande U1, que le terminal reçoit dans une étape ECTLT7.

Dans une étape ECTLT6, il est procédé à l'enregistrement du groupe de dispositifs DGrU1 en lien avec l'identifiant de l'installation StID dans un groupe de dispositifs rattaché à l'installation DGrSt.

La seconde unité centrale de commande U2 envoie également, en réponse au message de découverte MCTLD, dans une étape ECTLU27, un message de description de topologie MCTLTU2 comprenant une description d'un groupe de dispositifs DGrU2 rattaché à l'unité centrale de commande U2, que le terminal reçoit dans une étape ECTLT7.

Pour chaque dispositif D, une unité centrale de commande U peut également communiquer des commandes et paramètres associés à ces dispositifs. Les commandes peuvent être déduites par le terminal à partir du type de dispositif ou bien présentes par défaut dans l'application sur le terminal T, la liste des dispositifs servant à valider l'utilisation de ces commandes, si un dispositif de ce type est présent.

Dans une étape ECTLT8, il est procédé à l'enregistrement du groupe de dispositifs DGrU2 en lien avec l'identifiant de l'installation StID dans un groupe de dispositif rattaché à l'installation DGrSt.

L'identifiant StID de l'installation domotique 17 est donc associé à un groupe DGrSt de dispositifs regroupant les dispositifs contenus dans au moins le premier groupe DGrU1 de dispositifs attaché à la première unité centrale de commande U1 et au moins le deuxième groupe DGrU2 de dispositifs attaché à la deuxième unité centrale de commande U2.

Ainsi, les dispositifs sont considérés comme rattachés à au même identifiant d'une installation, dans un groupe qui rassemble l'ensemble des dispositifs de l'installation rattachés indifféremment à la première ou à la seconde unité centrale de commande qui peut être communiqué à un utilisateur ou à une application tierce.

A ce stade, la découverte de la topologie de l'installation sur le terminal peut être considérée comme terminée.

Une information en retour à l'utilisateur USr ou à une application tierce A peut être communiquée dans une étape ECTLT9 sous forme d'un message de réponse MCTLRp qui le reçoivent dans une étape ECTLUsr9 ou ECTLA9 respectivement. Alternativement, l'étape ECTLT9 peut correspondre à la présentation d'une interface à un utilisateur Usr sur le terminal utilisateur T permettant la commande ou le contrôle des dispositifs domotiques D appartenant au groupe de dispositifs DGrSt rattaché à l'identifiant de l'installation StID, indépendamment de leur rattachement à une unité centrale de commande U1 ou U2.

Lors de la déconnexion de l'application, demandée par l'utilisateur dans une étape ELUsr10 / ECTLA10 par une requête ou une instruction de sortie MCTLQ, le terminal T procède, dans une étape ECTLT10 à la fermeture de la connexion entre le terminal utilisateur T et les unités centrales de commande U1, U2, et à l'invalidation de l'enregistrement du groupe de dispositif rattaché à l'installation DGrSt, l'enregistrement du rattachement de l'au moins un identifiant UID de l'au moins une unité centrale de commande à l'identifiant de l'installation StID étant conservé.

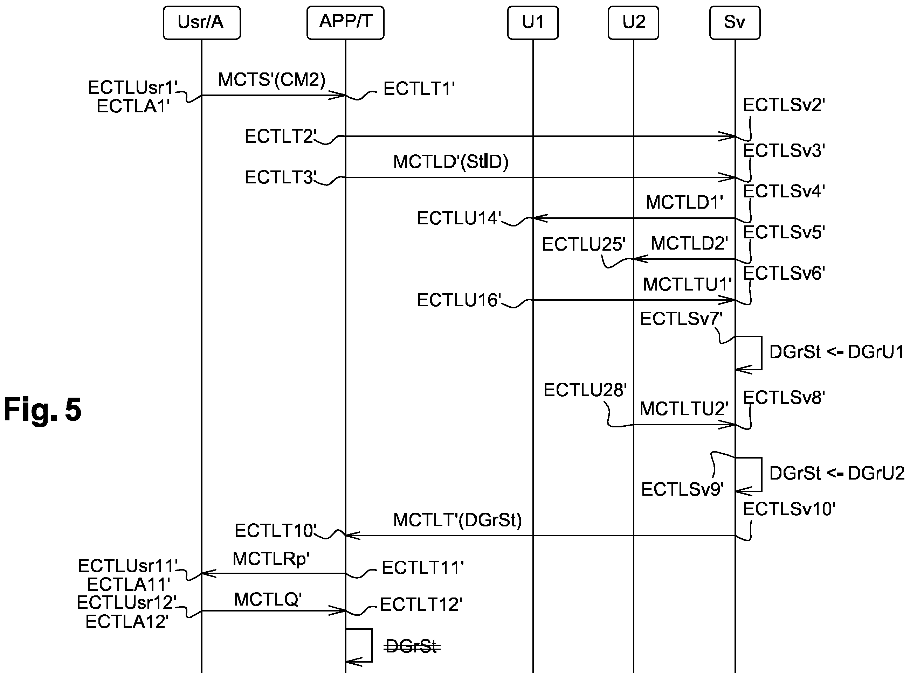

Une seconde mise en œuvre du procédé va à présent être décrit en référence à la figure 5, dans un cas d'utilisation d'une communication par un réseau étendu par l'intermédiaire d'un serveur Sv.

Dans une première étape ECTLT1', un message MCTLS ou une instruction de sélection de mode de communication est reçue par le terminal T en provenance par exemple d'un utilisateur ou d'une application tierce qui émet ou communique ce message ou cette instruction respectivement dans une étape ECTLUsr1' ou ECTLA1'. L'utilisateur peut avoir préalablement lancé l'application APP et ouvert son compte utilisateur. Il a renseigné ses identifiants UsrID, par exemple un login et mot de passe.

Nous supposerons dans le cas illustré sur la figure 5 que le mode de communication sélectionné est un second mode de connexion par un réseau étendu CM2 ;

Selon une variante, la sélection du mode de connexion peut être réalisée de façon automatique. Le terminal T vérifie la présence à proximité d'unités centrales de commande U en utilisant les procédures de découverte (discovery) spécifiques aux protocoles de communication locale comme par exemple Bluetooth ou Wifi. Si aucune unité centrale de commande U n'est détectée à proximité, alors le terminal T cherche à se connecter par un réseau étendu, par exemple Internet, à une unité de gestion Sv.

Une connexion est alors établie dans une étape ECTLT2' entre le terminal T et le serveur Sv par un réseau étendu de type Internet, le Serveur acceptant cette connexion dans une étape ECTLSv2'.
Ensuite, un message de découverte MCTLD' est envoyé dans une étape ECTLT3' en lien avec un identifiant d'installation StID à destination du serveur Sv, qui reçoit ce message dans une étape ECTLSv3'.

Nous supposerons que l'identifiant de l'installation StID de l'installation domotique 17 est associée une entité représentative d'une installation St elle-même associée à un groupe UGrSt comprenant au moins les identifiants UID1, UID2 d'une première unité centrale de commande U1 et d'une deuxième unité centrale de commande U2. Cette association a été enregistrée sur le serveur lors d'une phase d'enregistrement préalable.

Le serveur Sv réalise ensuite, dans une étape ECTLSv4', l'envoi d'un premier message de découverte MCTLD1' à destination de la première unité de commande U1 associée à l'entité représentative St, puis, dans une étape ECTLSv5', l'envoi d'un deuxième message de découverte MCTLD2' à destination de la deuxième unité de commande U2 associée à l'entité représentative St.

Par la suite, la première unité centrale de commande U1 envoie, en réponse au message de découverte MCTLD1', dans une étape ECTLU16', un message de description de topologie MCTLTU1' comprenant une description d'un groupe de dispositifs DGrU1 rattaché à l'unité centrale de commande U1, que le Serveur Sv reçoit dans une étape ECTLSv6'.

Dans une étape ECTLSv7', il est procédé à l'enregistrement du groupe de dispositifs DGrU1 ou à sa mise à jour en lien dans le groupe de dispositifs DGrSt rattaché à l'entité représentative de l'installation St.

La seconde unité centrale de commande U2 envoie également, en réponse au message de découverte MCTLD2', dans une étape ECTLU28', un message de description de topologie MCTLTU2' comprenant une description d'un groupe de dispositifs DGrU2 rattaché à l'unité centrale de commande U2, que le terminal reçoit dans une étape ECTLT8'.

Pour chaque dispositif D, une unité centrale de commande U peut également communiquer des commandes et paramètres associés à ces dispositifs. Les commandes peuvent être déduites par le Serveur Sv à partir du type de dispositif ou bien présentes par défaut sur le serveur Sv, la liste des dispositifs servant à valider l'utilisation de ces commandes, si un dispositif de ce type est présent.

Dans une étape ECTLSv9' il est procédé à l'enregistrement du groupe de dispositifs DGrU2 ou à sa mise à jour en lien dans le groupe de dispositifs DGrSt rattaché à l'entité représentative de l'installation St.

L'entité représentative St de l'installation domotique 17 est donc associé à un groupe DGrSt de dispositifs regroupant les dispositifs contenus dans au moins le premier groupe DGrU1 de dispositifs attaché à la première unité centrale de commande U1 et au moins le deuxième groupe DGrU2 de dispositifs attaché à la deuxième unité centrale de commande U2.

Ainsi, les dispositifs sont considérés comme rattachés à au même identifiant d'une installation, dans un groupe qui rassemble l'ensemble des dispositifs de l'installation rattachés indifféremment à la première ou à la seconde unité centrale de commande qui peut être communiqué à un utilisateur ou à une application tierce.

A ce stade, la découverte de la topologie de l'installation sur le Serveur Sv peut être considérée comme terminée.

Le serveur envoie dans une étape ECTLSv10' un message de description de topologie MCTLT' à destination du terminal utilisateur T comprenant la description du groupe de dispositifs DGrSt rattaché à l'identifiant de l'installation StID. Ce message est reçu par le terminal dans une étape ECTLT10'.

Une information en retour à l'utilisateur USr ou à une application tierce A peut être communiquée dans une étape ECTLT11' sous forme d'un message de réponse MCTLRp' qui le reçoivent dans une étape ECTLUsr11' ou ECTLA11' respectivement. Alternativement, l'étape ECTLT11' peut correspondre à la présentation d'une interface à un utilisateur Usr sur le terminal utilisateur T permettant la commande ou le contrôle des dispositifs domotiques D appartenant au groupe de dispositifs DGrSt rattaché à l'identifiant de l'installation StID, indépendamment de leur rattachement à une unité centrale de commande U1 ou U2.

Lors de la déconnexion de l'application, demandée par l'utilisateur dans une étape ELUsr12' / ECTLA12' par une requête ou une instruction de sortie MCTLQ, le terminal T procède, dans une étape ECTLT12 à la fermeture de la connexion entre le terminal utilisateur T et le serveur Sv, et à l'invalidation de l'enregistrement du groupe de dispositif rattaché à l'installation DGrSt, l'enregistrement de l'identifiant de l'installation StID étant conservé.

## Revendications

1. Procédé de contrôle d'une installation domotique comprenant au moins une unité centrale de commande (U); le procédé étant exécuté par un terminal utilisateur (T) et comprenant les étapes suivantes :
i. Sélection (ECTLT1, ECTLT1') d'un premier mode de connexion local (CM1) ou d'un deuxième mode de connexion par un réseau étendu (CM2), ladite sélection étant reçue de l'utilisateur du terminal ou d'une application que l'utilisateur a préalablement lancée;
ii. Etablissement (ECTLT2, ECTLT2') d'une connexion entre le terminal utilisateur et au moins une unité cible (U, U1, U2, Sv), ladite au moins une unité cible (U, U1, U2, Sv) étant une unité centrale de commande (U, U1, U2) dans le cas où le premier mode de connexion local (CM1) a été sélectionné, et une unité de gestion (Sv) dans le cas où le second mode de connexion par un réseau étendu est sélectionné (CM2) ;
iii. Envoi (ECTLT3, ECTLT3') d'un message de découverte (MCTLD1, MCTLD2, MCTLD') en lien avec un identifiant d'installation (StID) à destination de l'au moins une unité cible (U, U1, U2, Sv) ;
iv. Réception (ECTLT5, ECTLT7, ECTLT10') d'au moins un message de description de topologie en provenance de l'unité cible (U, U1, U2, Sv) comprenant une description d'un groupe de dispositifs (DGrSt) rattaché à l'identifiant de l'installation (StID).

2. Procédé de contrôle selon la revendication 1, comprenant en outre l'étape suivante :
- Présentation (ECTLT9, ECTLT10') d'une interface à un utilisateur (Usr) sur le terminal utilisateur (T) permettant la commande ou le contrôle des dispositifs domotiques (D) appartenant au groupe de dispositifs (DGrSt) rattaché à l'identifiant de l'installation (StID),

3. Procédé de contrôle selon l'une quelconque des revendications 1 ou 2, dans lequel le premier mode de connexion local (CM1) a été sélectionné, l'au moins une unité cible étant au moins une unité centrale de commande (U),
dans lequel l'étape d'envoi (ECTLT3, ECTLT4) d'un message de découverte (MCTLD) en lien avec un identifiant d'installation (StID) correspond à l'envoi d'un message de découverte à au moins une unité de commande (U, U1, U2) correspondant à un identifiant d'unité centrale de commande (UID) associé à un identifiant (StID) d'installation ;
et dans lequel l'étape de réception d'au moins un message de description de topologie correspond à :
- la réception (ECTLT5, ECTLT7) d'au moins un message de description de topologie en provenance de l'au moins une unité centrale de commande (U, U1, U2) comprenant une description d'un groupe de dispositifs (DGrU) rattaché à l'unité centrale de commande (U, U1, U2) et à
- l'enregistrement (ECTLT6, ECTLT8) du groupe de dispositifs (DGrU1, DGrU2) en lien avec l'identifiant de l'installation (StID) dans le groupe de dispositif rattaché à l'identifiant de l'installation (StID).

4. Procédé selon la revendication 3, dans lequel l'identifiant de l'installation (StID) de l'installation domotique (17) étant associée à un groupe (UGrSt) comprenant au moins les identifiants (UID1, UID2) d'une première unité centrale de commande (U1) et d'une deuxième unité centrale de commande (U2).

5. Procédé de contrôle selon la revendication 4, comprenant au moins les étapes suivantes :
- Une première étape d'envoi (ECTLT3) d'un premier message de découverte (MCTLD1) à la première unité de commande (U1) correspondant à un premier identifiant d'unité centrale de commande (UID1) associé à l'identifiant (StID) d'installation ;
- Une deuxième étape d'envoi (ECTLT4) d'un deuxième message de découverte (MCTLD2) à la deuxième unité de commande (U2) correspondant à un deuxième identifiant d'unité centrale de commande (UID2) associé à l'identifiant (StID) d'installation ;
- Une première étape de réception (ECTLT5) d'un premier message de description de topologie (MCTLTU1) comprenant une description d'un premier groupe de dispositifs (DGrU1) rattaché à la première unité centrale de commande (U1) ; et
- Une deuxième étape de réception (ECTLT7) d'un deuxième message de description de topologie (MCTLTU2) comprenant une description d'un deuxième groupe de dispositifs (DGrU2) rattaché à la deuxième unité centrale de commande (U2).
- Une première étape d'enregistrement (ECTLT6) du premier groupe de dispositifs (DGrU1) en lien avec l'identifiant de l'installation (StID) dans le groupe de dispositif rattaché à l'installation (DGrSt) ; et
- Une deuxième étape d'enregistrement (ECTLT8) du deuxième groupe de dispositifs (DGrU1) en lien avec l'identifiant de l'installation (StID) dans le groupe de dispositif rattaché à l'installation (DGrSt) ;
l'identifiant (StID) de l'installation domotique (17) étant associée à un groupe (DGrSt) de dispositifs regroupant les dispositifs contenus dans au moins le premier groupe (DGrU1) de dispositifs attaché à la première unité centrale de commande (U1) et au moins le deuxième groupe (DGrU2) de dispositifs attaché à la deuxième unité centrale de commande (U2).

6. Procédé de contrôle selon la revendication 1 ou 2, dans lequel le deuxième mode de connexion par un réseau étendu (CM2) a été sélectionné, l'au moins une unité cible étant au moins une unité de gestion (Sv),
dans lequel l'étape d'envoi (ECTLT3') d'un message de découverte (MCTLD') en lien avec un identifiant d'installation (StID) correspond à l'envoi d'un message de découverte à une unité de gestion (Sv) ;
et dans lequel l'étape de réception (ECTLT10') d'au moins un message de description de topologie correspond à la réception d'au moins un message de description de topologie en provenance de l'unité de gestion (Sv) comprenant une description d'un groupe de dispositifs (DGrSt) rattaché à l'identifiant de l'installation (StID).

7. Procédé selon la revendication 6, dans lequel l'identifiant de l'installation (StID) de l'installation domotique (17) est associée à un groupe (UGrSt) comprenant au moins les identifiants (UID1, UID2) d'une première unité centrale de commande (U1) et d'une deuxième unité centrale de commande (U2),
et dans lequel l'identifiant (StID) de l'installation domotique (17) est associée à un groupe (DGrSt) de dispositifs regroupant les dispositifs contenus dans au moins un premier groupe (DGrU1) de dispositifs attaché à la première unité centrale de commande (U1) et au moins un deuxième groupe (DGrU2) de dispositifs attaché à la deuxième unité centrale de commande (U2).

8. Procédé de contrôle selon l'une quelconque des revendications 1 à 7, comprenant en outre l'étape suivante :
- enregistrement d'une information de rattachement d'au moins un dispositif domotiques (D) à une unité centrale de commande (U) ;

9. Procédé de contrôle selon la revendication 8, dans lequel les dispositifs domotiques (D) sont identifiés de façon unique par un identifiant de dispositif (DURL) comprenant un identifiant de l'unité centrale de commande (UID) à laquelle se rattache ledit dispositif.

10. Procédé de contrôle selon l'une quelconque des revendications 1 à 9, comprenant en outre l'étape suivante :
- Fermeture de la connexion entre le terminal utilisateur (T) et l'au moins une unité cible (U, U1, U2, Sv)
- Invalidation (ECTLT10, ECTLT12') de l'enregistrement du groupe de dispositif rattaché à l'installation (DGrSt)

11. Produit programme d'ordinateur comprenant des instructions de code agencées pour mettre en œuvre les étapes d'un procédé selon l'une quelconque des revendications 1 à 10, lorsque ledit programme est exécuté par un processeur d'un terminal utilisateur (T).

12. Procédé de contrôle d'une installation domotique comprenant au moins une unité centrale de commande (U); le procédé étant exécuté par une unité de gestion (Sv) et comprenant les étapes suivantes :
i. Réception (ECTLSv3') d'un message de découverte (MCTLD') en lien avec un identifiant d'installation (StID) en provenance d'au moins un terminal utilisateur (T) ;
ii. Envoi (ECTLSv4', ECTLSv5') d'un message de découverte (MCTLD1', MCTLD2') à au moins une unité de commande (U, U1, U2) correspondant à un identifiant d'unité centrale de commande (UID1, UID2) associé à l'identifiant (StID) d'installation ;
iii. Réception (ECTLSv6', ECTLSv8') d'au moins un message de description de topologie (MCTLTU1', MCTLTU2') en provenance de l'au moins une unité centrale de commande (U, U1, U2) comprenant une description d'un groupe de dispositifs (DGrU1, DGrU2) rattaché à l'unité centrale de commande (U, U1, U2) ;
iv. Enregistrement (ECTLSv7', ECTLSv9') du groupe de dispositifs (DGrU1, DGrU2) rattaché à l'unité centrale de commande (U, U1, U2) dans un groupe de dispositif (DGrSt) rattaché à l'identifiant de l'installation (StID) ;
v. Envoi (ECTLSv10') d'au moins un message de description de topologie (MTD) à destination du terminal utilisateur (T) comprenant la description du groupe de dispositifs (DGrSt) rattaché à l'identifiant de l'installation (StID).

## Patentansprüche

1. Verfahren zur Steuerung einer Hausautomatisierungsanlage, die mindestens eine zentrale Bedieneinheit (U) umfasst; wobei das Verfahren von einem Benutzerendgerät (T) ausgeführt wird und die folgenden Schritte umfasst:
i. Auswählen (ECTLT1, ECTLT1') eines ersten lokalen Verbindungsmodus (CM1) oder eines zweiten Verbindungsmodus über ein Weitverkehrsnetzwerk (CM2), wobei die Auswahl vom Benutzer des Endgeräts oder von einer Anwendung, die der Benutzer zuvor gestartet hat, empfangen wird;
ii. Aufbauen (ECTLT2, ECTLT2') einer Verbindung zwischen dem Benutzerendgerät und mindestens einer Zieleinheit (U, U1, U2, Sv), wobei es sich bei der mindestens einen Zieleinheit (U, U1, U2, Sv) in dem Fall, in dem der erste lokale Verbindungsmodus (CM1) ausgewählt wurde, um eine zentrale Bedieneinheit (U, U1, U2) handelt, und in dem Fall, in dem der zweite Verbindungsmodus über ein Weitverkehrsnetzwerk (CM2) ausgewählt wird, wenn keine zentrale Bedieneinheit (U, U1, U2) in der Nähe gefunden wird, um eine Verwaltungseinheit (Sv) handelt;
iii. Senden (ECTLT3, ECTLT3') einer Erkennungsnachricht (MCTLD1, MCTLD2, MCTLD') in Verbindung mit einer Anlagenkennung (StID) an die mindestens eine Zieleinheit (U, U1, U2, Sv);
iv. Empfangen (ECTLT5, ECTLT7, ECTLT10') mindestens einer Topologiebeschreibungsnachricht von der Zieleinheit (U, U1, U2, Sv), die eine Beschreibung einer Gruppe von Vorrichtungen (DGrSt), die der Anlagenkennung (StID) zugeordnet ist, umfasst.

2. Steuerungsverfahren nach Anspruch 1, das weiter den folgenden Schritt umfasst:
- Darstellen (ECTLT9, ECTLT10') einer Schnittstelle für einen Benutzer (Usr) auf dem Benutzerendgerät (T), die die Bedienung oder die Steuerung der Hausautomatisierungsvorrichtungen (D), die zu der Gruppe von Vorrichtungen (DGrSt), die der Anlagenkennung (StID) zugeordnet ist, gehören, ermöglicht,

3. Steuerungsverfahren nach einem der Ansprüche 1 oder 2, wobei der erste lokale Verbindungsmodus (CM1) ausgewählt wurde, wobei es sich bei der mindestens einen Zieleinheit um mindestens eine zentrale Bedieneinheit (U) handelt,
wobei der Schritt des Sendens (ECTLT3, ECTLT4) einer Erkennungsnachricht (MCTLD) in Verbindung mit einer Anlagenkennung (StID) dem Senden einer Erkennungsnachricht an mindestens eine Bedieneinheit (U, U1, U2) entspricht, die einer Kennung einer zentralen Bedieneinheit (UID) entspricht, die mit einer Anlagenkennung (StID) verknüpft ist;
und wobei der Schritt des Empfangens mindestens einer Topologiebeschreibungsnachricht entspricht:
- dem Empfang (ECTLT5, ECTLT7) mindestens einer Topologiebeschreibungsnachricht von der mindestens einen zentralen Bedieneinheit (U, U1, U2), die eine Beschreibung einer Gruppe von Vorrichtungen (DGrU) umfasst, die der zentralen Bedieneinheit (U, U1, U2) zugeordnet ist, und
- dem Registrieren (ECTLT6, ECTLT8) der Gruppe von Vorrichtungen (DGrU1, DGrU2) in Verbindung mit der Anlagenkennung (StID) in der Gruppe von Vorrichtungen, die der Anlagenkennung (StID) zugeordnet ist.

4. Verfahren nach Anspruch 3, wobei die Anlagenkennung (StID) der Hausautomatisierungsanlage (17) mit einer Gruppe (UGrSt) verknüpft ist, die mindestens die Kennungen (UID1, UID2) einer ersten zentralen Bedieneinheit (U1) und einer zweiten zentralen Bedieneinheit (U2) umfasst.

5. Steuerungsverfahren nach Anspruch 4, das mindestens die folgenden Schritte umfasst:
- einen ersten Schritt des Sendens (ECTLT3) einer ersten Erkennungsnachricht (MCTLD1) an die erste Bedieneinheit (U1), die einer ersten Kennung einer zentralen Bedieneinheit (UID1) entspricht, die mit der Anlagenkennung (StID) verknüpft ist;
- einen zweiten Schritt des Sendens (ECTLT4) einer zweiten Erkennungsnachricht (MCTLD2) an die zweite Bedieneinheit (U2), die einer zweiten Kennung einer zentralen Bedieneinheit (UID2) entspricht, die mit der Anlagenkennung (StID) verknüpft ist;
- einen ersten Schritt des Empfangens (ECTLT5) einer ersten Topologiebeschreibungsnachricht (MCTLTU1), die eine Beschreibung einer ersten Gruppe von Vorrichtungen (DGrU1) umfasst, die der ersten zentralen Bedieneinheit (U1) zugeordnet ist; und
- einen zweiten Schritt des Empfangens (ECTLT7) einer zweiten Topologiebeschreibungsnachricht (MCTLTU2), die eine Beschreibung einer zweiten Gruppe von Vorrichtungen (DGrU2) umfasst, die der zweiten zentralen Bedieneinheit (U2) zugeordnet ist.
- einen ersten Schritt des Registrierens (ECTLT6) der ersten Gruppe von Vorrichtungen (DGrU1) in Verbindung mit der Anlagenkennung (StID) in der Gruppe von Vorrichtungen, die der Anlage (DGrSt) zugeordnet ist; und
- einen zweiten Schritt des Registrierens (ECTLT8) der zweiten Gruppe von Vorrichtungen (DGrU1) in Verbindung mit der Anlagenkennung (StID) in der Gruppe von Vorrichtungen, die der Anlage (DGrSt) zugeordnet ist;
wobei die Kennung (StID) der Hausautomatisierungsanlage (17) mit einer Gruppe (DGrSt) von Vorrichtungen verknüpft ist, die die Vorrichtungen, die in mindestens der ersten Gruppe (DGrU1) von Vorrichtungen, die an die erste zentrale Bedieneinheit (U1) angeknüpft ist, und mindestens der zweiten Gruppe (DGrU2) von Vorrichtungen, die an die zweite zentrale Bedieneinheit (U2) angeknüpft ist, enthalten sind, zusammenfasst.

6. Steuerungsverfahren nach Anspruch 1 oder 2, wobei der zweite Verbindungsmodus über ein Weitverkehrsnetzwerk (CM2) ausgewählt wurde, wobei es sich bei der mindestens einen Zieleinheit um mindestens eine Verwaltungseinheit (Sv) handelt,
wobei der Schritt des Sendens (ECTLT3') einer Erkennungsnachricht (MCTLD') in Verbindung mit einer Anlagenkennung (StID) dem Senden einer Erkennungsnachricht an eine Verwaltungseinheit (Sv) entspricht;
und wobei der Schritt des Empfangens (ECTLT10') mindestens einer Topologiebeschreibungsnachricht dem Empfang mindestens einer Topologiebeschreibungsnachricht von der Verwaltungseinheit (Sv) entspricht, die eine Beschreibung einer Gruppe von Vorrichtungen (DGrSt) umfasst, die der Anlagenkennung (StID) zugeordnet ist.

7. Verfahren nach Anspruch 6, wobei die Anlagenkennung (StID) der Hausautomatisierungsanlage (17) mit einer Gruppe (UGrSt) verknüpft ist, die mindestens die Kennungen (UID1, UID2) einer ersten zentralen Bedieneinheit (U1) und einer zweiten zentralen Bedieneinheit (U2) umfasst,
und wobei die Kennung (StID) der Hausautomatisierungsanlage (17) mit einer Gruppe (DGrSt) von Vorrichtungen verknüpft ist, die die Vorrichtungen, die in mindestens einer ersten Gruppe (DGrU1) von Vorrichtungen, die an die erste zentrale Bedieneinheit (U1) angeknüpft ist, und mindestens einer zweiten Gruppe (DGrU2) von Vorrichtungen, die an die zweite zentrale Bedieneinheit (U2) angeknüpft ist, enthalten sind, zusammenfasst.

8. Steuerungsverfahren nach einem der Ansprüche 1 bis 7, das weiter den folgenden Schritt umfasst:
- Registrieren einer Information über die Zuordnung mindestens einer Hausautomatisierungsvorrichtung (D) zu einer zentralen Bedieneinheit (U).

9. Steuerungsverfahren nach Anspruch 8, wobei die Hausautomatisierungsvorrichtungen (D) über eine Vorrichtungskennung (DURL), die eine Kennung der zentralen Bedieneinheit (UID), der die Vorrichtung zugeordnet wird, umfasst, eindeutig identifiziert werden.

10. Steuerungsverfahren nach einem der Ansprüche 1 bis 9, das weiter den folgenden Schritt umfasst:
- Schließen der Verbindung zwischen dem Benutzerendgerät (T) und der mindestens einen Zieleinheit (U, U1, U2, Sv),
- Aufheben der Gültigkeit (ECTLT10, ECTLT12') der Registrierung der Gruppe von Vorrichtungen, die der Anlage (DGrSt) zugeordnet ist.

11. Computerprogrammprodukt, das Codeanweisungen umfasst, die so eingerichtet sind, dass sie die Schritte eines Verfahrens nach einem der Ansprüche 1 bis 10 umsetzen, wenn das Programm von einem Prozessor eines Benutzerendgerätes (T) ausgeführt wird.

12. Verfahren zur Steuerung einer Hausautomatisierungsanlage, die mindestens eine zentrale Bedieneinheit (U) umfasst; wobei das Verfahren von einer Verwaltungseinheit (Sv) ausgeführt wird und die folgenden Schritte umfasst:
i. Empfangen (ECTLSv3') einer Erkennungsnachricht (MCTLD') in Verbindung mit einer Anlagenkennung (StID) von mindestens einem Benutzerendgerät (T);
ii. Senden (ECTLSv4', ECTLSv5') einer Erkennungsnachricht (MCTLD1', MCTLD2') an mindestens eine Bedieneinheit (U, U1, U2), die einer Kennung einer zentralen Bedieneinheit (UID1, UID2) entspricht, die mit der Anlagenkennung (StID) verknüpft ist;
iii. Empfangen (ECTLSv6', ECTLSv8') mindestens einer Topologiebeschreibungsnachricht (MCTLTU1', MCTLTU2') von der mindestens einen zentralen Bedieneinheit (U, U1, U2), die eine Beschreibung einer Gruppe von Vorrichtungen (DGrU1, DGrU2) umfasst, die der zentralen Bedieneinheit (U, U1, U2) zugeordnet ist;
iv. Registrieren (ECTLSv7', ECTLSv9') der Gruppe von Vorrichtungen (DGrU1, DGrU2), die der zentralen Bedieneinheit (U, U1, U2) zugeordnet ist, in einer Gruppe von Vorrichtungen (DGrSt), die der Anlagenkennung (StID) zugeordnet ist;
v. Senden (ECTLSv10') mindestens einer Topologiebeschreibungsnachricht (MTD) an das Benutzerendgerät (T), die die Beschreibung der Gruppe von Vorrichtungen (DGrSt), die der Anlagenkennung (StID) zugeordnet ist, umfasst.

## Claims

1. A method for monitoring a home automation installation comprising at least one central control unit (U); the method being executed by a user terminal (T) and comprising the following steps:
i. Selection (ECTLT1, ECTLT1') of a first local connection mode (CM1) or a second connection mode by a wide area network (CM2) said selection being received from the user of the terminal or of an application that the user has previously launched;
ii. Establishment (ECTLT2, ECTLT2') of a connection between the user terminal and at least one target unit (U, U1, U2, Sv), said at least one target unit (U, U1, U2, Sv) being a central control unit (U, U1, U2) in the case where the first local connection mode (CM1) has been selected, and a management unit (Sv) in the case where the second connection mode by a wide area network is selected (CM2) when no central control unit (U, U1, U2) is detected nearby;
iii. Sending (ECTLT3, ECTLT3') of a discovery message (MCTLD1, MCTLD2, MCTLD') in connection with an installation identifier (StID) towards at least one target unit (U, U1, U2, Sv);
iv. Reception (ECTLT5, ECTLT7, ECTLT10') of at least one topology description message from the target unit (U, U1, U2, Sv) comprising a description of a group of devices (DGrSt) attached to the identifier of the installation (StID).

2. The monitoring method according to claim 1, further comprising the following step:
- Presentation (ECTLT9, ECTLT10') of an interface to a user (Usr) on the user terminal (T) allowing the control or monitoring of the home automation devices (D) belonging to the group of devices (DGrSt) attached to the identifier of the installation (StID),

3. The monitoring method according to any one of claims 1 or 2, wherein the first local connection mode (CM1) has been selected, the at least one target unit being at least one central control unit (U),
wherein the sending step (ECTLT3, ECTLT4) of a discovery message (MCTLD) in connection with an installation identifier (StID) corresponds to the sending of a discovery message to at least one control unit (U, U1, U2) corresponding to a central control unit identifier (UID) associated with an installation identifier (StID);
and wherein the step of receiving at least one topology description message corresponds to:
- the reception (ECTLT5, ECTLT7) of at least one topology description message from the at least one central control unit (U, U1, U2) comprising a description of a group of devices (DGrU) attached to the central control unit (U, U1, U2) and to
- the registration (ECTLT6, ECTLT8) of the group of devices (DGrU1, DGrU2) in connection with the identifier of the installation (StID) in the group of devices attached to the identifier of the installation (StID).

4. The method according to claim 3, wherein the identifier of the installation (StID) of the home automation installation (17) being associated with a group (UGrSt) comprising at least the identifiers (UID1, UID2) of a first central control unit (U1) and a second central control unit (U2).

5. The monitoring method according to claim 4, comprising at least the following steps:
- a first step (ECTLT3) of sending a first discovery message (MCTLD1) to the first control unit (U1) corresponding to a first central control unit identifier (UID1) associated with the installation identifier (StID);
- a second step (ECTLT4) of sending a second discovery message (MCTLD2) to the second control unit (U2) corresponding to a second central control unit identifier (UID2) associated with the installation identifier (StID);
- a first step (ECTLT5) of receiving a first topology description message (MCTLTU1) comprising a description of a first group of devices (DGrU1) attached to the first central control unit (U1); and
- a second step (ECTLT7) of receiving a second topology description message (MCTLTU2) comprising a description of a second group of devices (DGrU2) attached to the second central control unit (U2),
- a first step (ECTLT6) of registering the first group of devices (DGrU1) in connection with the identifier of the installation (StID) in the group of devices attached to the installation (DGrSt); and
- a second step (ECTLT8) of registering the second group of devices (DGrU1) in connection with the identifier of the installation (StID) in the group of devices attached to the installation (DGrSt);
the identifier (StID) of the home automation installation (17) being associated with a group (DGrSt) of devices grouping together the devices contained in at least the first group (DGrU1) of devices attached to the first central control unit (U1) and at least the second group (DGrU2) of devices attached to the second central control unit (U2).

6. The monitoring method according to claim 1 or 2, wherein the second connection mode via a wide area network (CM2) has been selected, the at least one target unit being at least one management unit (Sv),
wherein the step (ECTLT3') of sending a discovery message (MCTLD') in connection with an installation identifier (StID) corresponds to the sending of a discovery message to a management unit (Sv);
and wherein the step of (ECTLT10') of receiving at least one topology description message corresponds to the reception of at least one topology description message from the management unit (Sv) comprising a description a group of devices (DGrSt) attached to the identifier of the installation (StID).

7. The method according to claim 6, wherein the identifier of the installation (StID) of the home automation installation (17) is associated with a group (UGrSt) comprising at least the identifiers (UID1, UID2) of a first central control unit (U1) and a second central control unit (U2),
and wherein the identifier (StID) of the home automation installation (17) is associated with a group (DGrSt) of devices grouping the devices contained in at least one first group (DGrU1) of devices attached to the first central control unit (U1) and at least one second group (DGrU2) of devices attached to the second central control unit (U2).

8. The monitoring method according to any one of claims 1 to 7, further comprising the following step:
- registering an information item relating to the attachment of at least one home automation device (D) to a central control unit (U);

9. The monitoring method according to claim 8, wherein the home automation devices (D) are uniquely identified by a device identifier (DURL) comprising an identifier of the central control unit (UID) to which said device is attached.

10. The monitoring method according to any one of claims 1 to 9, further comprising the following step:
- Closure of the connection between the user terminal (T) and the at least one target unit (U, U1, U2, Sv)
- Invalidation (ECTLT10, ECTLT12') of the registration of the group of devices attached to the installation (DGrSt)

11. A computer program product comprising code instructions arranged to implement the steps of a method according to any one of claims 1 to 10, when said program is executed by a processor of a user terminal (T).

12. The method for monitoring a home automation installation comprising at least one central control unit (U); the method being executed by a management unit (Sv) and comprising the following steps:
i. Reception (ECTLSv3') of a discovery message (MCTLD') in connection with an installation identifier (StID) from at least one user terminal (T);
ii. Sending (ECTLSv4 ', ECTLSv5') of a discovery message (MCTLD1', MCTLD2') to at least one control unit (U, U1, U2) corresponding to a central control unit identifier (UID1, UID2) associated with the installation identifier (StID);
iii. Reception (ECTLSv6', ECTLSv8') of at least one topology description message (MCTLTU1', MCTLTU2') from the at least one central control unit (U, U1, U2) comprising a description of a group of devices (DGrU1, DGrU2) attached to the central control unit (U, U1, U2);
iv. Registration (ECTLSv7', ECTLSv9') of the group of devices (DGrU1, DGrU2) attached to the central control unit (U, U1, U2) in a group of devices (DGrSt) attached to the identifier of the installation (StID);
v. Sending (ECTLSv10') of at least one topology description message (MTD) towards the user terminal (T) comprising the description of the group of devices (DGrSt) attached to the identifier of the installation (StID).
